# EUROPEAN PATENT APPLICATION

(11) **EP 1 243 618 A1**
(43) Date of publication of application: **25.09.2002**
(21) Application number: 01938582.2
(22) Date of filing: 11.06.2001
(51) Int. Cl.: C08L 81/02, C08K 3/00

(54) **POLYARYLENE SULFIDE RESIN COMPOSITION**

(30) Priority: 29.06.2000 JP 2000195763; 29.06.2000 JP 2000195764
(71) Applicant: IDEMITSU PETROCHEMICAL CO., LTD., Tokyo 130-0015 (JP)
(72) Inventor: TSUBOKURA, Yutaka, Ichihara-shi, Chiba 299-0107 (JP); KOSAKA, Wataru, Ichihara-shi, Chiba 299-0107 (JP); OKUYAMA, Kazuhiro, Ichihara-shi, Chiba 299-0107 (JP); KOJIMA, Nobuyuki, Ichihara-shi, Chiba 299-0107 (JP)
(74) Representative: Gille Hrabal Struck Neidlein Prop Roos
(86) International application number: JP0104896
(87) International publication number: WO02000794

(57) **Abstract**

Provided is a polyarylene sulfide resin composition comprising (a) from 30 to 75 % by mass of a polyarylene sulfide resin and (b) from 25 to 70 % by mass of a filler, and containing (c) from 0.08 to 1.0 part by weight, relative to 100 parts by mass of the sum of (a) and (b), of an oxidized polyethylene wax having an acid value of at least 10 mg KOH/g and a dropping point of not higher than 120°C, or (d) from 0.1 to 1.0 part by weight relative to the same of a silicone oil having a viscosity at 25°C of from 30 to 6,000 mm²/sec. The mold releasability of the moldings of the composition is improved, not interfering with the mechanical and chemical properties intrinsic to polyarylene sulfide resins.

## Description

### TECHNICAL FIELD

The present invention relates to a polyarylene sulfide resin composition. More precisely, it relates to a polyarylene sulfide resin which is so designed that the mold releasability and the mechanical properties of its moldings are well balanced.

### BACKGROUND ART

Polyarylene sulfide resins have the advantages of good heat resistance, good flame retardancy, high stiffness, good chemical resistance and good electric insulation. They are widely used for molding materials for automobile parts and for parts of electric and electronic appliances and chemical instruments. When reinforced with a fibrous reinforcing agent such as glass fibers, the mechanical strength of polyarylene sulfide resins can be further increased and, in addition, the properties thereof relative to their cost are improved. Therefore, polyarylene sulfide resin compositions containing such a fibrous reinforcing agent are favorably used for the material of moldings required to have better heat resistance and higher mechanical strength.

Such polyarylene sulfide resins and polyarylene sulfide resin compositions generally have a high affinity for metal of molds and others, and shrink only a little when solidified from their melts. Therefore, the problem with them is that their moldings are difficult to release from molds. For improving the mold releasability of such polyarylene sulfide resin moldings, various mold release agents have been proposed. For example, proposed is using metal salts of fatty acids such as zinc stearate and lithium stearate as in JP-A 162752/1979; esters of fatty acids with polyalcohols such as glycerol tristearate and pentaerythritol tetrastearate as in JP-A 74751/1983; esters of aliphatic polycarboxylic acids with aliphatic monoalcohols as in JP-A 59513/1997; and N,N'-alkylenebisalkanamides as in USP 4,395,509. These mold release agents are effective for improving the mold releasability of moldings. However, since polyarylene sulfide resins and polyarylene sulfide resin compositions are generally molded at high temperatures, the mold release agent therein is often problematic in that it decomposes at such high temperatures to give gas, which may yellow the surface of the moldings and may lower the mechanical strength thereof.

In JP-A 229949/1985, proposed is a polyarylene sulfide resin composition comprising a polyarylene sulfide resin and containing a fibrous reinforcing agent and a low-molecular polyethylene. In JP-A 283575/1996, proposed is a polyarylene sulfide resin composition comprising a high-molecular, non-crosslinked polyarylene sulfide resin and containing a low-molecular polyethylene or polypropylene. The low-molecular polyolefin added to the resin will be effective for improving the mold releasability of the polyarylene sulfide resin compositions, but worsens the mechanical and chemical properties including heat resistance, flame retardancy, stiffness and chemical resistance intrinsic to polyarylene sulfide resins. For these reasons, no one has succeeded in obtaining a polyarylene sulfide resin composition of good property balance that satisfies both the mold releasability and the mechanical and chemical properties.

On the other hand, a polyarylene sulfide resin composition comprising a polyarylene sulfide resin and containing silicone oil is proposed in JP-A 135845/1979. They say that, when the blend ratio of silicone oil in the polyarylene sulfide resin composition is increased, then the affinity of the composition for metal such as solder is lowered, and therefore the releasability of the moldings of the composition from molds could be improved. However, silicone oil added to polyarylene sulfide resin is problematic in that it worsens the mechanical and chemical properties including heat resistance, flame retardancy, stiffness and chemical resistance intrinsic to the resin.

Given that situation, it is desired to develop a polyarylene sulfide resin molding material of which the mold releasability of the moldings is improved not interfering with the mechanical and chemical properties including good heat resistance, flame retardancy, stiffness and chemical resistance intrinsic to the resin.

The present invention is to provide a polyarylene sulfide resin composition of which the mold releasability of the moldings is improved not interfering with the mechanical and chemical properties intrinsic to the polyarylene sulfide resin constituting the composition.

### DISCLOSURE OF THE INVENTION

We, the present inventors have assiduously studied to solve the problems noted above, and, as a result, have found that a polyarylene sulfide resin composition comprising a polyarylene sulfide resin and containing a filler along with an oxidized polyethylene wax having a specific property or a silicone oil having a specific viscosity range in a specific blend ratio can attain the object as above. On the basis of these findings, we have completed the present invention.

Specifically, the invention is summarized as follows:
1. A polyarylene sulfide resin composition comprising
   (a) from 30 to 75 % by mass of a polyarylene sulfide resin and
   (b) from 25 to 70 % by mass of a filler, and containing (c) from 0.08 to 1.0 part by weight, relative to 100 parts by mass of the sum of (a) and (b), of an oxidized polyethylene wax having an acid value of at least 10 mg KOH/g and a dropping point of not higher than 120°C.
2. A polyarylene sulfide resin composition comprising
   (a) from 35 to 70 % by mass of a polyarylene sulfide resin and
   (b) from 30 to 65 % by mass of a filler, and containing (c) from 0.1 to 0.8 parts by mass, relative to 100 parts by mass of the sum of (a) and (b), of an oxidized polyethylene wax having an acid value of at least 15 mg KOH/g and a dropping point of not higher than 110°C.
3. A polyarylene sulfide resin composition comprising
   (a) from 30 to 75 % by mass of a polyarylene sulfide resin and
   (b) from 25 to 70 % by mass of a filler, and containing (d) from 0.1 to 1.0 part by weight, relative to 100 parts by mass of the sum of (a) and (b), of a silicone oil having a viscosity at 25°C of from 30 to 6,000 mm²/sec.
4. A polyarylene sulfide resin composition comprising
   (a) from 35 to 70 % by mass of a polyarylene sulfide resin and
   (b) from 30 to 65 % by mass of a filler, and containing (d) from 0.3 to 0.8 parts by mass, relative to 100 parts by mass of the sum of (a) and (b), of a silicone oil having a viscosity at 25°C of from 50 to 5,000 mm²/sec.
5. The polyarylene sulfide resin composition of above 3 or 4, wherein the silicone oil has a backbone structure of dimethylpolysiloxane.
6. The polyarylene sulfide resin composition of above 3 or 4, wherein the silicone oil is at least one selected from silanol-modified dimethylpolysiloxanes and alkoxy-modified dimethylpolysiloxanes.

### BEST MODES OF CARRYING OUT THE INVENTION

The polyarylene sulfide resin composition of the invention comprises (a) from 30 to 75 % by mass of a polyarylene sulfide resin and (b) from 25 to 70 % by mass of a filler, containing (c) from 0.08 to 1.0 part by weight, relative to 100 parts by mass of the sum of (a) and (b), of an oxidized polyethylene wax having an acid value of at least 10 mg KOH/g and a dropping point of not higher than 120°C, or containing (d) from 0.1 to 1.0 part by weight, relative to 100 parts by mass of the sum of (a) and (b), of a silicone oil having a viscosity at 25°C of from 30 to 6,000 mm²/sec.

The basic repetitive units constituting the polymer chain of the component (a), polyarylene sulfide resin comprise an arylene group and a sulfur atom. The arylene group includes, for example, a p-phenylene group, a m-phenylene group, an o-phenylene group, an alkyl-substituted phenylene group, a halogen-substituted phenylene group, a p,p'-biphenylene group, a p,p'-diphenylenesulfone group, a p,p'-diphenylene-ether group, a p,p'-diphenylenecarbonyl group, and a naphthalene group.

For the polyarylene sulfide resin for the component (a), preferred are polyphenylene sulfides of which the basic structural units are p-phenylenesulfide groups having a p-phenylene group selected from the arylene groups mentioned above. Also preferred for use herein are copolymers comprising such p-phenylenesulfide groups and m-phenylenesulfide groups. Of the polyphenylene sulfide copolymers, more preferred are block copolymers in which the ratio of the p-phenylenesulfide repetitive units is at least 70 mol% and the p-phenylenesulfide repetitive units and the m-phenylenesulfide repetitive units are in blocks.

Such polyphenylene sulfides and polyphenylene sulfide copolymers for use herein may be prepared in various known methods. For example, preferred are substantially linear, high-molecular polyphenylene sulfides obtained through polycondensation of a starting material consisting essentially of a bifunctional halogenoaromatic compound. The bifunctional halogenoaromatic compound may be combined with a trifunctional halogenoaromatic compound to form a partially branched or crosslinked structure in the polymer chain of polyphenylene sulfides and polyphenylene sulfide copolymers, which are also preferred for use in the invention. In addition, the substantially linear polyphenylene sulfides may be crosslinked under heat or through oxidation to thereby control the melt viscosity of the resulting crosslinked polymers for use herein. The polyarylene sulfide resin for the component (a) preferably has a melt viscosity (measured at 310°C at a shear rate of 1200/sec) falling between 50 and 10,000 poises, more preferably between 100 and 5,000 poises.

For the filler for the component (b), preferred is a fibrous filler. The fibrous filler includes, for example, organic fibers such as aramide fibers; and inorganic fibers such as glass fibers, carbon fibers, asbestos fibers, silica fibers, silica-alumina fibers, zirconia fibers, boron nitride fibers, silicon nitride fibers, boron fibers, potassium titanate fibers, stainless fibers, aluminium metal fibers, titanium metal fibers, copper metal fibers, and brass fibers. Of those fibrous fillers, especially preferred are glass fibers, carbon fibers and potassium titanate fibers.

The fibrous filler may be combined with a granular filler and a tabular filler. The granular filler includes, for example, carbon black, silica, quartz, glass beads, glass fiber, calcium silicate, aluminium silicate, kaolin, talc, clay, diatomaceous earth, wollastonite, iron oxide, titanium oxide, zinc oxide, alumina, calcium carbonate, magnesium carbonate, calcium sulfate, barium sulfate, silicon carbide, and silicon nitride. The tabular filler includes, for example, mica, glass flakes, and various types of metal flakes. The combination of the fibrous filler with any of such a granular filler and a tabular filler improves the mechanical strength of the moldings of the polyarylene sulfide resin composition containing the combined fillers and also improves the dimensional stability and the electric properties of the moldings.

Preferably, the fibrous filler and also the granular filler and the tabular filler that may be optionally combined with it for the component (b) are subjected to surface treatment or to treatment for binding before they are added to the component (a), polyarylene sulfide resin. For the surface-treating agent and the binding agent, usable are any known epoxy compounds, isocyanate compounds, silane compounds and titanate compounds.

The component (c), oxidized polyethylene wax for use herein has an acid value of at least 10 mg KOH/g and a dropping point of not higher than 120°C. The oxidized polyethylene wax of the type may be prepared through polymerization of ethylene, or may be prepared through thermal decomposition of polyethylene having a high molecular weight. Preferably, its molecular weight falls between 1,000 and 6,000 or so, and its density falls between 0.94 and 0.97 g/cm³ or so.

Regarding its chemical property, the oxidized polyethylene wax for the component (c) has an acid value of at least 10 mg KOH/g, measured according to ASTM D1386. This is because polyethylene wax having an acid value of smaller than 10 mg KOH/g, or that is, polyethylene wax oxidized in some degree to have a carboxyl group but the degree of its oxidation is low, and non-oxidized polyethylene wax are not effective for satisfactorily improving the mold releasability of the resin composition containing any of them. More preferably, the acid value of the oxidized polyethylene wax for the component (c) is at least 15 mg KOH/g. The acid value of the oxidized polyethylene wax for the component (c) is preferably higher, but its uppermost limit is 60 mg KOH/g or so.

The dropping point of the oxidized polyethylene wax for the component (c) should not be higher than 120°C, measured according to ASTM D127. This is because the oxidized polyethylene wax, if having a dropping point of higher than 120°C, is ineffective for satisfactorily improving the mold releasability of the resin composition containing it. More preferably, the dropping point of the oxidized polyethylene wax for the component (c) is not higher than 110°C. The dropping point of the oxidized polyethylene wax is preferably lower, but its lowermost limit 100°C or so.

Accordingly, for the component (c), it is more desirable that the oxidized polyethylene wax has an acid value of at least 15 mg KOH/g and a dropping point of not higher than 110°C.

The viscosity at 25°C of the silicone oil for the component (d) falls between 30 and 6,000 mm²/sec. This is because if silicone oil having a viscosity at 25°C of lower than 30 mm²/sec is used for the component (d), the mold releasability of the moldings of the polyarylene sulfide resin composition containing it is not good. If silicone oil having a viscosity at 25°C of higher than 6,000 mm²/sec is used for the component (d), the mold releasability of the moldings of the polyarylene sulfide resin composition containing it is also not good. More preferably, the viscosity at 25°C of the silicone oil for the component (d) falls between 50 and 5,000 mm²/sec.

Regarding its chemical structure, it is desirable that the backbone polymer chain of the silicone oil has a structure of dimethylpolysiloxane. For it, more preferred is a reactive silicone oil of which the backbone polymer chain has a dimethylpolysiloxane structure and the methyl branches or terminals are partly substituted with any of a hydrogen atom, a hydroxyl group or an alkoxy group such as methoxy or ethoxy group.

The blend ratio of the constitutive components of the polyarylene sulfide resin composition of the invention is such that the polyarylene sulfide resin for the component (a) accounts for from 30 to 75% by mass, the filler for the component (b) accounts for from 25 to 70 % by mass, and the oxidized polyethylene wax for the component (c) accounts for from 0.08 to 1.0 part by weight or the silicone oil for the component (d) accounts for from 0.1 to 1.0 part by weight relative to 100 parts by mass of the sum of the components (a) and (b).

In the resin composition, the blend ratio of the polyarylene sulfide resin for the component (a) falls between 30 and 75 % by mass. This is because if the blend ratio of the component (a) is smaller than 30 % by mass, the mechanical strength of the resulting polyarylene sulfide resin composition is low, and, in addition, the flowability of the resin composition is poor and the moldability thereof is therefore not good. On the other hand, if the blend ratio of the component (a) is larger than 75 % by mass, the mechanical strength, especially the stiffness of the resulting polyarylene sulfide resin composition is low. More preferably, the blend ratio of the component (a), polyarylene sulfide resin falls between 35 and 70 % by mass.

The blend ratio of the filler for the component (b) falls between 25 and 70 % by mass. This is because if the blend ratio of the component (b) is smaller than 25 % by mass, the mechanical strength, especially the stiffness of the resulting polyarylene sulfide resin composition is low. On the other hand, if the blend ratio of the component (b) is higher than 70 % by mass, the mechanical strength of the resulting polyarylene sulfide resin composition is low, and, in addition, the flowability of the resin composition is poor and the moldability thereof is therefore not good. More preferably, the blend ratio of the component (b), filler falls between 30 and 65 % by mass.

The blend ratio of the oxidized polyethylene wax for the component (c) falls between 0.08 and 1.0 part by weight relative to 100 parts by mass of the sum of the two components (a) and (b). This is because if the blend ratio of the component (c) is smaller than 0.08 parts by mass, the mold releasability of the moldings of the resulting polyarylene sulfide resin composition is not good. On the other hand, if the blend ratio of the component (c) is larger than 1.0 part by weight, it interferes with the properties of the resulting polyarylene sulfide resin composition, or that is, it lowers and worsens the mechanical strength and the chemical properties intrinsic to the polyarylene sulfide resin reinforced with the fibrous filler. More preferably, the blend ratio of the component (c), oxidized polyethylene wax falls between 0.1 and 0.8 parts by mass relative to 100 parts by mass of the two components (a) and (b).

The blend ratio of the silicone oil for the component (d) falls between 0.1 and 1.0 part by weight relative to 100 parts by mass of the sum of the two components (a) and (b). This is because if the blend ratio of the component (d) is smaller than 0.1 parts by mass, the mold releasability of the moldings of the resulting polyarylene sulfide resin composition is not good. On the other hand, if the blend ratio of the component (d) is larger than 1.0 part by weight, it interferes with the properties of the resulting polyarylene sulfide resin composition, or that is, it lowers and worsens the mechanical strength and the chemical properties intrinsic to the polyarylene sulfide resin reinforced with the fibrous filler. More preferably, the blend ratio of the component (d), silicone oil falls between 0.3 and 0.8 parts by mass relative to 100 parts by mass of the two components (a) and (b).

Accordingly, the blend ratio of the constitutive components of the polyarylene sulfide resin composition of the invention is more preferably such that the polyarylene sulfide resin for the component (a) accounts for from 35 to 70 % by mass, the filler for the component (b) accounts for from 30 to 65 % by mass, and the oxidized polyethylene wax for the component (c) accounts for from 0.1 to 0.8 parts by mass or the silicone oil for the component (d) accounts for from 0.3 to 0.8 parts by mass relative to 100 parts by mass of the sum of the components (a) and (b). The polyarylene sulfide resin composition designed to satisfy the preferred requirements as above more favorably ensures the balance of good mold releasability of its moldings and good mechanical strength and chemical properties intrinsic to polyarylene sulfide resins.

The polyarylene sulfide resin composition may be produced in any known method. For example, the constituent components of the composition are uniformly mixed optionally along with additives thereto in a mixer such as a tumbler or a Henschel mixer, and the resulting mixture is fed into a single-screw or double-screw extruder, and kneaded in melt therein and extruded out of it, and thereafter pelletized. In this method, the condition for melting and kneading the mixture is not specifically defined. For example, the mixture may be melted and kneaded at a temperature higher by from 5 to 100°C, more preferably by from 10 to 60°C than the melting point of the polyarylene sulfide resin in the mixture. The optional additives may be flame retardant, antioxidant, UV absorbent, lubricant, nucleating agent, foaming agent and colorant.

The invention is described more concretely with reference to the following Examples and Comparative Examples, which, however, are not intended to restrict the scope of the invention.

### [Example 1]

### (1) Production of Polyphenylene Sulfide Resin Composition:

For the starting material for the component (a), used was a polyphenylene sulfide resin having a melt viscosity at 300°C of 1,000 poises (Topren's T-3); and for the filler for the component (b), used were glass fibers having a fiber diameter of 10 µm and a length of 3 mm (Asahi Fiber Glass' CS03JAFT591). Regarding the blend ratio of the components (a) and (b), the component (a) accounts for 60 % by mass of the sum of (a) and (b), and the component (b) therefore accounts for 40 % by mass of the sum of (a) and (b).

For the component (c), used was oxidized polyethylene wax having an acid value of from 15 to 19 mg KOH/g and a dropping point of from 100 to 108°C (Clariant Japan's Hostalub H12). The blend ratio of the component (c) was 0.2 parts by mass relative to 100 parts by mass of the sum of the two components (a) and (b).

The three components were uniformly mixed in a Henschel mixer, and then fed into a double-screw extruder. In the double-screw extruder in which the cylinder temperature was set at 320°C, the mixture was kneaded in melt, then extruded out into strands, cooled, and cut into pellets of the polyphenylene sulfide resin composition.

### (2) Evaluation of Polyphenylene Sulfide Resin Composition:

### <1> Flowability Evaluation:

The flowability of the polyphenylene sulfide resin composition obtained in (1) was evaluated on the basis of the spiral flow length in injection-molding of the composition.

Concretely, a 30-ton injection-molding machine (by Toshiba Machine Co., Ltd.) was used, and the sample to be tested was injection-molded into test pieces having a thickness of 1 mm. The cylinder temperature was 320°C; the mold temperature was 135°C; and the injection pressure was 100 MPa. In this process, the spiral flow length of the sample was measured. The result is given in Table 1.

### <2> Stiffness Evaluation:

The stiffness of the polyphenylene sulfide resin composition obtained in (1) was evaluated on the basis of the flexural strength and the flexural modulus of its moldings measured according to ASTM D790. The result is given in Table 1.

### <3> Impact Strength Evaluation:

The impact strength of the moldings of the polyphenylene sulfide resin composition obtained in (1) was measured according to ASTM D256. The result is given in Table 1.

### <4> Mold Releasability Evaluation:

The polyphenylene sulfide resin composition obtained in (1) was tested for the mold releasability of its moldings, as follows:

A 50-ton injection-molding machine (by Nippon Seikosho) was used, and the sample to be tested was injection-molded into special-form moldings each composed of a bottom plate of 60 mm (length) × 80 mm (width) × 3 mm (thickness) and a cylinder of 30 mm (height) × 20 mm (outer diameter) × 2 mm (thickness) standing on the center of the bottom plate. The cylinder temperature was 320°C; the mold temperature was 135°C; and the cooling period was 5 seconds. After thus injection-molded, the moldings were taken out of the mold, and the root area of the cylinder in each molding was visually checked for cracks. The mold releasability of the moldings was evaluated according to the following criteria. The result is given in Table 1.
(A) No crack was found, and the mold releasability is good (O).
(B) Some fine cracks were found, and the mold releasability is not so good (Δ).
(C) Many cracks were found, and the mold releasability is bad (×) .

### [Example 2]

The same process as in Example 1 was repeated. In this, however, the blend ratio of the component (c), oxidized polyethylene wax was 0.1 parts by mass. The test results are given in Table 1.

### [Example 3]

The same process as in Example 1 was repeated. In this, however, 0.5 parts by mass of oxidized polyethylene wax having an acid value of from 22 to 28 mg KOH/g and a dropping point of from 102 to 107°C (Clariant Japan's Hoe-Wax PED522) was used for the component (c). The test results are given in Table 1.

### [Comparative Example 1]

The same process as in Example 1 was repeated. In this, however, the blend ratio of the component (c), oxidized polyethylene wax was 0.05 parts by mass. The test results are given in Table 1.

### [Comparative Example 2]

The same process as in Example 1 was repeated. In this, however, 1.2 parts by mass of the oxidized polyethylene wax used in Example 3 was used for the component (c). The test results are given in Table 1.

### [Comparative Example 3]

The same process as in Example 1 was repeated. In this, however, 0.2 parts by mass of polyethylene wax having an acid value of 0 mg KOH/g and a dropping point of from 110 to 115°C (Clariant Japan's Hoe-Wax PE820) was used in place of the oxidized polyethylene wax for the component (c). The test results are given in Table 1.

### [Comparative Example 4]

The same process as in Example 1 was repeated. In this, however, 0.2 parts by mass of oxidized polyethylene wax having an acid value of from 15 to 19 mg KOH/g and a dropping point of from 120 to 125°C (Clariant Japan's Hoe-Wax PED191) was used in place of the oxidized polyethylene wax used in Example 1 for the component (c). The test results are given in Table 1.

### [Example 4]

The same process as in Example 1 was repeated. In this, however, the blend ratio of the component (a), polyphenylene sulfide resin was 70 % by mass of the sum of the components (a) and (b); the blend ratio of the component (b), filler was 30 % by mass of the sum of the components (a) and (b); and the blend ratio of the component (c), oxidized polyethylene wax was 0.3 parts by mass relative to 100 parts by mass of the sum of the components (a) and (b). The test results are given in Table 2.

### [Example 5]

The same process as in Example 1 was repeated. In this, however, polyphenylene sulfide resin having a melt viscosity at 300°C of 300 poises (Topren's T-1) was used for the component (a); the blend ratio of the component (a) was 50 % by mass of the sum of the components (a) and (b); the glass fibers were combined with a granular filler, calcium carbonate (by Shiraishi industry's P-30) for the component (b); the blend ratio of the glass fibers was 30 % by mass and that of the granular filler was 20 % by mass of the sum of the components (a) and (b) ; and the blend ratio of the oxidized polyethylene wax for the component (c) was 0.1 parts by mass. The test results are given in Table 2.

### [Example 6]

The same process as in Example 1 was repeated. In this, however, the same polyphenylene sulfide resin as that used in Example 5 was used, and its blend ratio was 40 % by mass of the sum of the components (a) and (b); and the blend ratio of the glass fibers for the component (b) was 60 % by mass of the sum of the components (a) and (b). The test results are given in Table 2.

### [Example 7]

The same process as in Example 1 was repeated. In this, however, the same polyphenylene sulfide resin as that used in Example 5 was used for the component (a), and its blend ratio was 35 % by mass of the sum of the components (a) and (b); the glass fibers were combined with the same calcium carbonate as in Example 5 for the component (b); and the blend ratio of the glass fibers was 35 % by mass and that of the calcium carbonate was 30 % by mass of the sum of the components (a) and (b). The test results are given in Table 2.

### [Comparative Example 5]

The same process as in Example 4 was repeated. In this, however, the blend ratio of the polyphenylene sulfide resin for the component (a) was 80 % by mass of the sum of the components (a) and (b); and the blend ratio of the filler for the component (b) was 20 % by mass of the sum of the components (a) and (b). The test results are given in Table 2.

### [Comparative Example 6]

The same process as in Example 7 was repeated. In this, however, the same polyphenylene sulfide resin as that used in Example 5 was used for the component (a), and its blend ratio was 25 % by mass of the sum of the components (a) and (b); the glass fibers were combined with the same calcium carbonate as in Example 5 for the component (b); and the blend ratio of the glass fibers was 40 % by mass and that of the calcium carbonate was 35 % by mass of the sum of the components (a) and (b). The test results are given in Table 2.

### [Example 8]

The same process as in Example 1 was repeated. In this, however, 0.5 parts by mass, relative to 100 parts by mass of the sum of the components (a) and (b), of silicone oil was used for the component (d). The silicone oil herein used for the component (d) is silanol-modified dimethylsilicone oil having a viscosity at 25°C of 100 mm²/sec (Nippon Unicar's L9000 (100)). The test results are given in Table 3.

### [Example 9]

The same process as in Example 8 was repeated. In this, however, alkoxy-modified dimethylsilicone oil having a viscosity at 25°C of 130 mm²/sec (Nippon Unicar's FZ3779) was used for the component (d); and its blend ratio was 0.3 parts by mass relative to 100 parts by mass of the sum of the components (a) and (b). The test results are given in Table 3.

### [Example 10]

The same process as in Example 8 was repeated. In this, however, non-modified dimethylsilicone oil having a viscosity at 25°C of 1000 mm²/sec (Nippon Unicar's L45 (1000)) was used for the component (d) ; and its blend ratio was 0.7 parts by mass relative to 100 parts by mass of the sum of the components (a) and (b). The test results are given in Table 3.

### [Example 11]

The same process as in Example 8 was repeated. In this, however, non-modified dimethylsilicone oil having a viscosity at 25°C of 5000 mm²/sec (Nippon Unicar's L45 (5000)) was used for the component (d); and its blend ratio was 0.8 parts by mass relative to 100 parts by mass of the sum of the components (a) and (b). The test results are given in Table 3.

### [Example 12]

The same process as in Example 8 was repeated. In this, however, non-modified dimethylsilicone oil having a viscosity at 25°C of 50 mm²/sec (Nippon Unicar's L45 (50)) was used for the component (d); and its blend ratio was 0.9 parts by mass relative to 100 parts by mass of the sum of the components (a) and (b). The test results are given in Table 3.

### [Comparative Example 7]

The same process as in Example 8 was repeated. In this, however, the blend ratio of the silicon oil for the component (d) was 0.05 parts by mass. The test results are given in Table 3.

### [Comparative Example 8]

The same process as in Example 9 was repeated. In this, however, the blend ratio of the silicon oil for the component (d) was 1.2 parts by mass. The test results are given in Table 3.

### [Comparative Example 9]

The same process as in Example 8 was repeated. In this, however, non-modified dimethylsilicone oil having a viscosity at 25°C of 20 mm²/sec (Nippon Unicar's L45 (20)) was used for the component (d); and its blend ratio was 0.5 parts by mass relative to 100 parts by mass of the sum of the components (a) and (b). The test results are given in Table 3.

### [Comparative Example 10]

The same process as in Example 8 was repeated. In this, however, silanol-modified dimethylsilicone oil having a viscosity at 25°C of 8,000 mm²/sec (Nippon Unicar's L900 (8000)) was used for the component (d); and its blend ratio was 0.5 parts by mass relative to 100 parts by mass of the sum of the components (a) and (b). The test results are given in Table 3.

### [Example 13]

The same process as in Example 8 was repeated. In this, however, the blend ratio of the component (a), polyphenylene sulfide resin was 70 % by mass of the sum of the components (a) and (b); the blend ratio of the component (b), filler was 30 % by mass of the sum of the components (a) and (b); and the same silicone oil as in Example 9 was used for the component (d), and its blend ratio was 0.8 parts by mass relative to 100 parts by mass of the sum of the components (a) and (b). The test results are given in Table 4.

### [Example 14]

The same process as in Example 8 was repeated. In this, however, polyphenylene sulfide resin having a melt viscosity at 300°C of 300 poises (Topren's T-1) was used for the component (a), and its blend ratio was 50 % by mass of the sum of the components (a) and (b); and the glass fibers were combined with a granular filler, calcium carbonate (Shiraishi Industry's P-30) for the component (b), the blend ratio of the glass fibers was 30 % by mass and that of the calcium carbonate was 20 % by mass of the sum of the components (a) and (b). The test results are given in Table 4.

### [Example 15]

The same process as in Example 8 was repeated. In this, however, the same polyphenylene sulfide resin as in Example 14 was used for the component (a) and its blend ratio was 40 % by mass of the sum of the components (a) and (b); and the blend ration of the glass fibers for the component (b) was 60 % by mass of the sum of the components (a) and (b) . The test results are given in Table 4.

### [Example 16]

The same process as in Example 8 was repeated. In this, however, the same polyphenylene sulfide resin as in Example 14 was used for the component (a) and its blend ratio was 35 % by mass of the sum of the components (a) and (b); and the glass fibers were combined with the same calcium carbonate as in Example 14 for the component (b), the blend ratio of the glass fibers was 35 % by mass and that of the calcium carbonate was 30 % by mass of the sum of the components (a) and (b) . The test results are given in Table 4.

### [Comparative Example 11]

The same process as in Example 13 was repeated. In this, however, the blend ratio of the component (a), polyphenylene sulfide resin was 80 % by mass of the sum of the components (a) and (b) ; the blend ratio of the component (b) was 20 % by mass of the sum of the components (a) and (b); and the same silicone oil as in Example 8 was used for the component (d). The test results are given in Table 4.

### [Comparative Example 12]

The same process as in Example 14 was repeated. In this, however, the blend ratio of the component (a), polyphenylene sulfide resin was 25 % by mass of the sum of the components (a) and (b); and the glass fibers were combined with the same calcium carbonate as in Example 14 for the component (b), the blend ratio of the glass fibers was 40 % by mass and that of the calcium carbonate was 35 % by mass of the sum of the components (a) and (b). The test results are given in Table 4.

**Table 1**

| Example (Comparative Example) | | 1 | 2 | 3 | (1) | (2) | (3) | (4) |
|---|---|---|---|---|---|---|---|---|
| Polyarylene Sulfide Resin | T-3 | 60 | 60 | 60 | 60 | 60 | 60 | 60 |
| | T-1 | - | - | - | - | - | - | - |
| Filler | Glass Fibers | 40 | 40 | 40 | 40 | 40 | 40 | 40 |
| | Calcium Carbonate | - | - | - | - | - | - | - |
| Oxidized Polyethylene Wax | Type (*1) | <1> | <1> | <2> | <1> | <2> | <3> | <4> |
| | Amount (mass parts) | 0.2 | 0.1 | 0.5 | 0.05 | 1.2 | 0.2 | 0.2 |
| Spiral Flow Length (mm) | | 136 | 135 | 148 | 131 | 169 | 147 | 137 |
| Flexural Strength (MPa) | | 254 | 256 | 232 | 255 | 203 | 222 | 242 |
| Flexural Modulus (GPa) | | 14.2 | 14.2 | 14.4 | 14.6 | 14.0 | 13.9 | 14.3 |
| Izod Impact Strength (KJ/mm²) (*2) | | 7.3 | 7.4 | 6.8 | 7.3 | 6.3 | 6.5 | 7.0 |
| Izod Impact Strength (KJ/mm²) (*3) | | 42 | 41 | 36 | 43 | 23 | 28 | 40 |
| Mold Releasability (presence or absence of cracks) | | ○ | ○ | ○ | × | ○ | × | × |

| | | | | | | | | |
|---|---|---|---|---|---|---|---|---|
| (*1) Oxidized polyethylene wax | | | | | | | | |
| <1> Hostalub H12 (acid value: 15 to 19, dropping point: 100 to 108°C) | | | | | | | | |
| <2> Hoe-Wax PED522 (acid value: 22 to 28, dropping point: 102 to 107°C) | | | | | | | | |
| <3> Hoe-Wax PE820 (acid value: 0, dropping point: 110 to 115°C) | | | | | | | | |
| <4> Hoe-Wax PED191 (acid value; 15 to 19, dropping point: 120 to 125°C) | | | | | | | | |
| (*2) with notch, | | | | | | | | |
| (*3) without notch | | | | | | | | |

**Table 2**

| Example (Comparative Example) | | 4 | 5 | 6 | 7 | (5) | (6) |
|---|---|---|---|---|---|---|---|
| Polyarylene Sulfide Resin | T-3 | 70 | - | - | - | 80 | - |
| | T-1 | - | 50 | 40 | 35 | - | 25 |
| Filler | Glass Fibers | 30 | 30 | 60 | 35 | 20 | 40 |
| | Calcium Carbonate | - | 20 | - | 30 | - | 35 |
| Oxidized Polyethylene Wax | Type (*1) | <1> | <1> | <1> | <1> | <1> | <1> |
| | Amount (mass parts) | 0.3 | 0.1 | 0.2 | 0.2 | 0.3 | 0.2 |
| Spiral Flow Length (mm) | | 171 | 168 | 128 | 98 | 208 | 72 |
| Flexural Strength (MPa) | | 186 | 215 | 215 | 231 | 129 | 180 |
| Flexural Modulus (GPa) | | 12.0 | 14.4 | 20.1 | 19.4 | 8.7 | 23.2 |
| Izod Impact Strength (KJ/mm²) (*2) | | 6.6 | 5.2 | 6.1 | 6.1 | 5.0 | 4.3 |
| Izod Impact Strength (KJ/mm²) (*3) | | 32 | 28 | 23 | 25 | 20 | 20 |
| Mold Releasability (presence or absence of cracks) | | ○ | ○ | ○ | ○ | Δ | ○ |

| | | | | | | | |
|---|---|---|---|---|---|---|---|
| (*1) Oxidized polyethylene wax | | | | | | | |
| <1> Hostalub H12 (acid value: 15 to 19, dropping point: 100 to 108°C) <2> Hoe-Wax PED522 (acid value: 22 to 28, dropping point: 102 to 107°C) <3> Hoe-Wax PE820 (acid value: 0, dropping point: 110 to 115°C) <4> Hoe-Wax PED191 (acid value; 15 to 19, dropping point: 120 to 125°C) | | | | | | | |
| (*2) with notch, | | | | | | | |
| (*3) without notch | | | | | | | |

**Table 3**

| Example (Comparative Example) | | 8 | 9 | 10 | 11 | 12 | (7) | (8) | (9) | (10) |
|---|---|---|---|---|---|---|---|---|---|---|
| Polyarylene Sulfide Resin | T-3 | 60 | 60 | 60 | 60 | 60 | 60 | 60 | 60 | 60 |
| | T-1 | - | - | - | - | - | - | - | - | - |
| Filler | Glass Fibers | 40 | 40 | 40 | 40 | 40 | 40 | 40 | 40 | 40 |
| | Calcium Carbonate | - | - | - | - | - | - | - | - | - |
| Silicone Oil | Type (*1) | <1> | <2> | <3> | <4> | <5> | <1> | <2> | <6> | <7> |
| | Amount (mass parts) | 0.5 | 0.3 | 0.7 | 0.8 | 0.9 | 0.05 | 1.2 | 0.5 | 0.5 |
| Spiral Flow Length (mm) | | 135 | 135 | 137 | 143 | 139 | 132 | 168 | 140 | 144 |
| Flexural Strength (MPa) | | 256 | 258 | 248 | 240 | 258 | 257 | 223 | 243 | 240 |
| Flexural Modulus (GPa) | | 14.2 | 14.0 | 14.3 | 14.2 | 14.2 | 14.2 | 13.9 | 14.3 | 14.0 |
| Izod Impact Strength (KJ/mm²) (*2) | | 7.8 | 7.6 | 7.0 | 6.9 | 7.5 | 7.8 | 6.3 | 7.6 | 6.5 |
| Izod Impact Strength (KJ/mm²) (*3) | | 44 | 42 | 39 | 36 | 42 | 43 | 28 | 45 | 38 |
| Mold Releasability (presence or absence of cracks) | | ○ | ○ | ○ | ○ | ○ | × | ○ | × | × |

| | | | | | | | | | | |
|---|---|---|---|---|---|---|---|---|---|---|
| (*1) Silicone oil | | | | | | | | | | |
| <1> Silanol-modified dimethylsilicone oil L9000 (100) (viscosity: 100 mm²/sec) | | | | | | | | | | |
| <2> Alkoxy-modified dimethylsilicone oil FZ3779 (viscosity: 130 mm²/sec) | | | | | | | | | | |
| <3> Non-modified dimethylsilicone oil L45 (1000) (viscosity: 1000 mm²/sec) | | | | | | | | | | |
| <4> Non-modified dimethylsilicone oil L45 (5000) (viscosity: 5000 mm²/sec) | | | | | | | | | | |
| <5> Non-modified dimethylsilicone oil L45 (50) (viscosity: 50 mm²/sec) | | | | | | | | | | |
| <6> Non-modified dimethylsilicone oil L45 (20) (viscosity: 20 mm²/sec) | | | | | | | | | | |
| <7> Silanol-modified dimethylsilicone oil L9000 (8000) (viscosity: 8000 mm²/sec) | | | | | | | | | | |
| (*2) with notch, | | | | | | | | | | |
| (*3) without notch | | | | | | | | | | |

**Table 4**

| Example (Comparative Example) | | 13 | 14 | 15 | 16 | (11) | (12) |
|---|---|---|---|---|---|---|---|
| Polyarylene Sulfide Resin | T-3 | 70 | - | - | - | 80 | - |
| | T-1 | - | 50 | 40 | 35 | - | 25 |
| Filler | Glass Fibers | 30 | 30 | 60 | 35 | 20 | 40 |
| | Calcium Carbonate | - | 20 | - | 30 | - | 35 |
| Silicone Oil | Type (*1) | <2> | <1> | <1> | <1> | <1> | <1> |
| | Amount (mass parts) | 0.8 | 0.5 | 0.5 | 0.5 | 0.8 | 0.5 |
| Spiral Flow Length (mm) | | 168 | 165 | 127 | 101 | 210 | 70 |
| Flexural Strength (MPa) | | 188 | 220 | 213 | 235 | 138 | 185 |
| Flexural Modulus (GPa) | | 12.0 | 14.6 | 20.3 | 19.2 | 8.4 | 23.8 |
| Izod Impact Strength (KJ/mm²) (*2) | | 6.7 | 5.4 | 6.5 | 6.8 | 5.3 | 4.5 |
| Izod Impact Strength (KJ/mm²)(*3) | | 30 | 30 | 24 | 23 | 22 | 25 |
| Mold Releasability (presence or absence of cracks) | | ○ | ○ | ○ | ○ | Δ | ○ |

| | | | | | | | |
|---|---|---|---|---|---|---|---|
| (*1) Silicone oil | | | | | | | |
| <1> Silanol-modified dimethylsilicone oil L9000 (100) (viscosity: 100 mm²/sec) | | | | | | | |
| <2> Alkoxy-modified dimethylsilicone oil FZ3779 (viscosity: 130 mm²/sec) | | | | | | | |
| (*2) with notch, | | | | | | | |
| (*3) without notch | | | | | | | |

### INDUSTRIAL APPLICABILITY

The present invention provides a polyarylene sulfide resin composition of which the mold releasability of the moldings is improved not interfering with the mechanical and chemical properties intrinsic to polyarylene sulfide resins.

## Claims

1. A polyarylene sulfide resin composition comprising
(a) from 30 to 75 % by mass of a polyarylene sulfide resin and
(b) from 25 to 70 % by mass of a filler, and containing (c) from 0.08 to 1.0 part by weight, relative to 100 parts by mass of the sum of (a) and (b), of an oxidized polyethylene wax having an acid value of at least 10 mg KOH/g and a dropping point of not higher than 120°C.

2. A polyarylene sulfide resin composition comprising
(a) from 35 to 70 % by mass of a polyarylene sulfide resin and
(b) from 30 to 65 % by mass of a filler, and containing (c) from 0.1 to 0.8 parts by mass, relative to 100 parts by mass of the sum of (a) and (b), of an oxidized polyethylene wax having an acid value of at least 15 mg KOH/g and a dropping point of not higher than 110°C.

3. A polyarylene sulfide resin composition comprising
(a) from 30 to 75 % by mass of a polyarylene sulfide resin and
(b) from 25 to 70 % by mass of a filler, and containing (d) from 0.1 to 1.0 part by weight, relative to 100 parts by mass of the sum of (a) and (b), of a silicone oil having a viscosity at 25°C of from 30 to 6,000 mm²/sec.

4. A polyarylene sulfide resin composition comprising
(a) from 35 to 70 % by mass of a polyarylene sulfide resin and
(b) from 30 to 65 % by mass of a filler, and containing (d) from 0.3 to 0.8 parts by mass, relative to 100 parts by mass of the sum of (a) and (b), of a silicone oil having a viscosity at 25°C of from 50 to 5,000 mm²/sec.

5. The polyarylene sulfide resin composition as claimed in claim 3 or 4, wherein the silicone oil has a backbone structure of dimethylpolysiloxane.

6. The polyarylene sulfide resin composition as claimed in claim 3 or 4, wherein the silicone oil is at least one selected from silanol-modified dimethylpolysiloxanes and alkoxy-modified dimethylpolysiloxanes.
